# EUROPEAN PATENT APPLICATION

(11) **EP 4 838 706 A1**
(43) Date of publication of application: **11.11.2026**
(21) Application number: 26174335.5
(22) Date of filing: 23.04.2026
(51) Int. Cl.: H01R 4/64, F16B 21/08, G06F 1/18, H01R 4/06, H01R 4/48, H01R 11/12

(54) **RECEPTACLE TO ENCLOSURE DIRECT GROUNDING**

(30) Priority: 07.05.2025 US 202563801406 P; 24.03.2026 US 202619576883
(71) Applicant: Vertiv Corporation, Westerville, OH 43082 (US)
(72) Inventor: MICEK, Jeffery, Westerville, 43082 (US); GILSON, Casey, Westerville, 43082 (US); PREUSS, Jesse, Westerville, 43082 (US)
(74) Representative: Cousens, Nico

(57) **Abstract**

A self-clinching fastener and method for distributing electrical power to rack equipment is disclosed. The self-clinching fastener may include a U-shaped lug with corrugated ends. The self-clinching fastener may include a multi-forked cylindrically shaped fastener having a tapered middle to contact the U-shaped lug. Applied contact force between the multi-forked cylindrically shaped fastener and the U-shaped lug may fix the multi-forked cylindrically shaped fastener within the U-shaped lug. In particular, the present disclosure may provide a self-clinching fastener that reduces the footprint, labor, and material traditionally required by eliminating the need for soldering wires to the receptacle or to a fastener to fix a wire connection between the enclosure and the receptacle.

## Description

### CROSS-REFERENCE TO RELATED APPLICATIONS

The present application claims the benefit of U.S. Provisional Patent Application Serial Number 63/801,406 filed May 7, 2025.

### TECHNICAL FIELD

The present disclosure relates to a fastener for use in enclosures commonly found in data centers. More specifically, a self-clinching fastener is disclosed that enables a direct electrical connection.

### BACKGROUND

In data centers, the structures used to house and organize various compute equipment such as computer processing units (CPUs), graphic processing units (GPUs), networking devices, and storage units are commonly referred to as "racks". These racks allow for efficient space utilization and provide the necessary support, power, and cooling for the equipment.

CPUs and GPUs are secured into the rack with mounting brackets, ensuring they stay firmly in place as the racks have vertical rails with holes allowing the server to be screwed into the desired height. The required density of data centers and racks continues to increase in an effort to get the most compute power out of any one data center. Additionally, recent trends toward higher-density data centers utilizing compact, power intensive GPUs for artificial intelligence increase the electrical power demands. Along with GPUs, networking and power cables are often strung around the back of the rack requiring cable management systems to prevent disorganization and ensure coolant flows are not obstructed.

Traditionally, power receptacles are mounted within the rack to distribute power to various equipment. These receptacles are often made up of a durable housing made of electrically insulated material such as plastic encasing the electrical connections. The electrical connections are conductive metal parts inside the receptacle where a plug's prongs connect to the electrical system. For typical North American receptacles, there are two vertical slots for the line and neutral connections, and a round or D-shaped hole for the ground connection. Typically, wires must be soldered to the receptacle to establish the mounting and electrical connections. This may involve coupling the rack to the receptacle for grounding, as well as connecting the two vertical slots designated for the line and neutral connections. This process is labor intensive, consumes valuable internal space inside the rack as well as increases material costs.

Thus, there is a need for an improvement to electrically connect the equipment directly to a power distribution center in one instance and to directly connect the equipment directly to a rack in another instance where grounding is required.

### SUMMARY

Embodiments described herein relate to a self-clinching fastener for an electrical connection between a rack and a receptacle where the receptacle distributes electrical power to equipment. In particular, devices and processes of the present disclosure provides a novel self-clinching fastener that reduces the footprint, labor, and material traditionally required. This is accomplished by eliminating the need for soldering wires to the receptacle or to a fastener to fix a wire connection between the enclosure and the receptacle.

In a data center, the connection between a power source and a rack is essential for delivering stable and reliable power to all the equipment within the rack. The power primarily comes from the electrical grid, supplemented by backup sources like generators and uninterruptible power supplies (UPS) to maintain power during outages. This electricity is then routed through the data center's power infrastructure which may include power distribution units (PDUs). Among other equipment, the PDU includes a plurality of receptacles. Each receptacle supplies electrical power tailored for specific computer equipment. This comprehensive infrastructure supports not only power availability but also efficiency and redundancy, which are crucial for maintaining uptime and reliability of demanding data centers.

In accordance with an embodiment of the present disclosure, an electrical connection between a receptacle and the rack is described whereby the ground connection of the receptacle is connected to the rack which is grounded to the earth or the building's grounding system. More specifically, the electrical connection between the receptacle and the rack is made by a self-clinching fastener. The self-clinching fastener may include a U-shaped lug with corrugated ends, connected to a receptacle; and a multi-forked cylindrically shaped fastener having a tapered middle to contact the U-shaped lug. When contact force is applied between the multi-forked cylindrically shaped fastener and the U-shaped lug, the contact force fixes the multi-forked cylindrically shaped fastener within the U-shaped lug. Additional embodiments of the present disclosure include the electrical connection made to the line connection of the receptacle and/or the neutral connection of the receptacle by way of the self-clinching fastener. For example, the U-shaped lug is configured to fix a multi-forked cylindrically shaped fastener within the U-shaped lug when contact force is applied between them.

In accordance with another embodiment of the present disclosure, an electrical connection between a grounding bar is described whereby the ground connection of the grounding bar is connected to the rack which is grounded to the earth or the building's grounding system. More specifically, the electrical connection between the grounding bar and the rack may be made by a self-clinching fastener. The self-clinching fastener includes a U-shaped lug with corrugated ends, connected to a grounding bar; and a multi-forked cylindrically shaped fastener having a tapered middle to contact the U-shaped lug, where an applied contact force between the multi-forked cylindrically shaped fastener and the U-shaped lug fixes the multi-forked cylindrically shaped fastener within the U-shaped lug of the grounding bar.

A self-clinching fastener is disclosed in accordance with one or more illustrative embodiments of the present disclosure. In one illustrative embodiment, the self-clinching fastener may include a U-shaped lug with corrugated ends. In another illustrative embodiment, the self-clinching fastener may include a multi-forked cylindrically shaped fastener having a tapered middle to contact the U-shaped lug. In another illustrative embodiment, an applied contact force between the multi-forked cylindrically shaped fastener and the U-shaped lug may fix the multi-forked cylindrically shaped fastener within the U-shaped lug.

In a further aspect, the U-shaped lug may be connected to a receptacle. In another aspect, the U-shaped lug may be connected to a ground connection of the receptacle. In another aspect, the U-shaped lug may be connected to a line connection of the receptacle. In another aspect, the U-shaped lug may be connected to a neutral connection of the receptacle.

In another illustrative embodiment, the multi-forked cylindrically shaped fastener may be fixed to a frame. In another illustrative embodiment, the multi-forked cylindrically shaped fastener may be fixed to a grounding source. In another illustrative embodiment, the self-clinching fastener may include a U-shaped lug with corrugated ends connected to a grounding bar. In another illustrative embodiment, the multi-forked cylindrically shaped fastener may be fixed to a grounding source. In another illustrative embodiment, the U-shaped lug may be connected to a line connection of a receptacle. In another illustrative embodiment, the U-shaped lug may be connected to a neutral connection of a receptacle. In another illustrative embodiment, the multi-forked cylindrically shaped fastener may be fixed to a frame.

A method of coupling a self-clinching fastener is disclosed in accordance with one or more illustrative embodiments of the present disclosure. In one illustrative embodiment, the method may include coupling a U-shaped lug to a receptacle. In another illustrative embodiment, the method may include coupling a multi-forked cylindrical fastener to a frame. In another illustrative embodiment, the method may include applying force between the U-shaped lug and the multi-forked cylindrical fastener. In another illustrative embodiment, the method may include coupling, based on the applied force, the U-shaped lug to the multi-forked cylindrical fastener.

In a further aspect, coupling the U-shaped lug to the receptacle may include the U-shaped lug being physically and electrically connected to a ground connection of the receptacle. In another aspect, the multi-forked cylindrical fastener may include a plurality of forks extending cylindrically from a fastener base with a tapered middle ending at a lug base. In another aspect, the plurality of forks may each extend independently in a pie shape form from the fastener base, such that when in contact with the corrugated ends of the U-shaped lug, the plurality of forks may be configured to radially compress towards each other, providing a spring-like radial contact force.

In another illustrative embodiment, coupling the U-shaped lug to the multi-forked cylindrical fastener may provide constant physical and electrical connection. In another illustrative embodiment, the U-shaped lug may be fixed to a grounding bar, and the grounding bar may be connected to a power distribution unit (PDU). In another illustrative embodiment, the U-shaped lug may be configured to couple to a line connection of the receptacle. In another illustrative embodiment, the U-shaped lug may be configured to couple to a neutral connection of the receptacle.

Other aspects and advantages of the invention will become apparent from the following detailed description, taken in conjunction with the accompanying drawings, illustrating by way of example the principles of the invention.

### BRIEF DESCRIPTION OF THE DRAWINGS

The disclosure will be readily understood by the following detailed description in conjunction with the accompanying drawings, wherein like reference numerals designate like elements:
FIG. 1 illustrates a self-clinching fastener including a multi-forked cylindrical fastener coupled to a U-shaped lug of a receptacle, in accordance with one or more embodiments of the present disclosure;
FIG. 2 illustrates an enlarged view of the multi-forked cylindrical fastener, in accordance with one or more embodiments of the present disclosure;
FIGS. 3A and 3B illustrate perspective views of the grounding bar and rear view of a PDU, respectively, in accordance with one or more embodiments of the present disclosure.
FIG.4 illustrates a flow diagram illustrating steps performed in a method for fixing a multi-forked cylindrical fastener to a U-shaped lug, in accordance with one or more embodiments of the present disclosure;
FIG. 5 illustrates a rack PDU of a rack, in accordance with one or more embodiments of the present disclosure.

### DETAILED DESCRIPTION

The figures described above, and the written description of specific structures and functions below are not presented to limit the scope of what Applicants have invented or the scope of the appended claims. Rather, the Figures and written description are provided to teach any person skilled in the art to make and use the inventions for which patent protection is sought. Those skilled in the art will appreciate that not all features of a commercial embodiment of the inventions are described or shown for the sake of clarity and understanding. Persons of skill in this art will also appreciate that the development of an actual commercial embodiment incorporating aspects of the present inventions will require numerous implementation-specific decisions to achieve the developer's goal for the commercial embodiment. Such implementation-specific decisions may include and likely are not limited to, compliance with system-related, business-related, government-related, and other constraints, which may vary by specific implementation, location, and from time to time. While a developer's efforts might be complex and time-consuming in an absolute sense, such efforts would be, nevertheless, a routine undertaking for those of skill in this art having the benefit of this disclosure. It must be understood that the inventions disclosed and taught herein are susceptible to numerous and various modifications and alternative forms.

The use of a singular term, such as, but not limited to, "a," is not intended as limiting of the number of items. The use of relational terms, such as, but not limited to, "top," "bottom," "left," "right," "upper," "lower," "down," "up," "side," and the like are used in the written description for clarity in specific reference to the Figures and are not intended to limit the scope of the inventions or the appended claims. The terms "including" and "such as" are for illustrative purposes but not limited thereto. The terms "couple," "coupled," "coupling," "coupler," and like terms are used broadly herein and can include any method or device for securing, binding, bonding, fastening, attaching, joining, inserting therein, forming thereon or therein, communicating, or otherwise associating, for example, mechanically, magnetically, electrically, chemically, operably, directly or indirectly with intermediate elements, one or more pieces of members together and can further include without limitation integrally forming one functional member with another in a unity fashion. The coupling can occur in any direction, including rotationally. Further, all parts and components of the disclosure that are capable of being physically embodied inherently include imaginary and real characteristics regardless of whether such characteristics are expressly described herein, including but not limited to characteristics such as axes, ends, inner and outer surfaces, interior spaces, tops, bottoms, sides, boundaries, dimensions (e.g., height, length, width, thickness), mass, weight, volume, and density, among others.

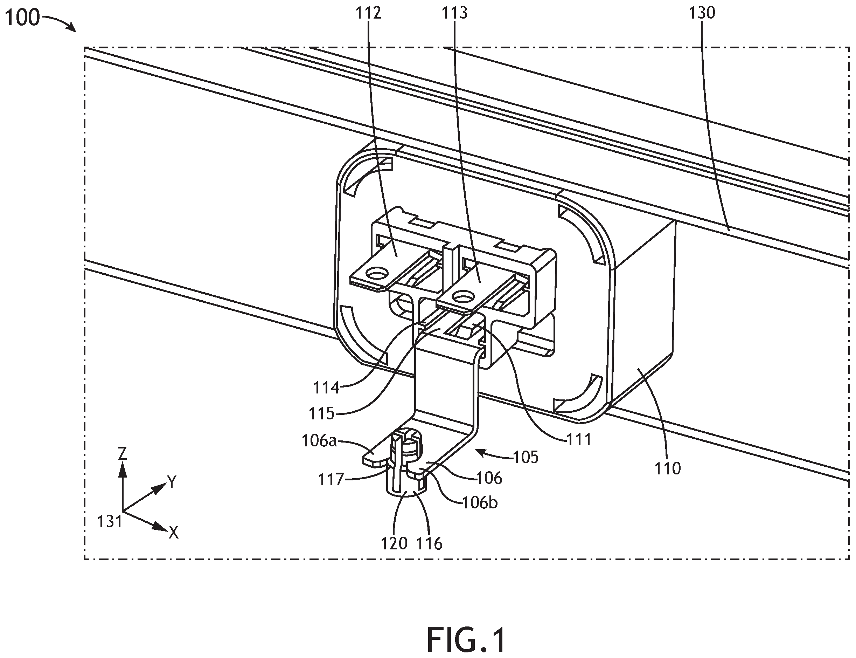

FIG. 1 illustrates a self-clinching fastener 100 including a multi-forked cylindrical fastener 120 coupled to a U-shaped lug 105 of a receptacle 110, in accordance with one or more embodiments of the present disclosure. The receptacle 110 may be included in a power distribution unit (PDU) 130. The U-shaped lug 105 may be configured to physically and electrically connect to the ground connection 111 of the receptacle 110, either at the time of manufacturing, by way of extrusion, or during installation. In embodiments, the U-shaped lug 105 includes a plurality of conductive prongs 115. The prongs 115 may be made of any suitable conductive material such as a metal including copper and/or aluminum. The prongs 115 may be configured to (e.g., sized, arranged and aligned to) slide into and electrically connect with the conductive slots 114. An opposing end of the U-shaped lug 105 may include corrugated ends 106 (e.g., ends 106a, 106b) that form a U-shaped end of the U-shaped lug 105.

In embodiments, the receptacle 110 includes two prongs 112, 113 configured to be plugged into another receptacle, such as for receiving power.

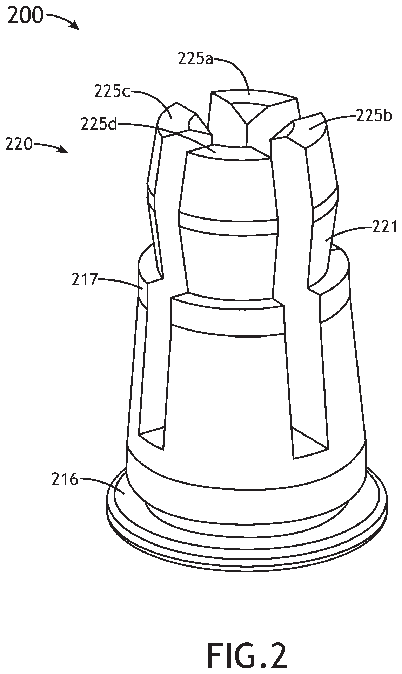

FIG. 2 illustrates a view 200 of the multi-forked cylindrical fastener 220, in accordance with one or more embodiments of the present disclosure. In embodiments, the multi-forked cylindrical fastener 220 includes a plurality of forks 225a-d extending cylindrically from the fastener base 216 (e.g., fastener base 116 of FIG. 1) with a tapered middle 221 ending at a lug base 217 for engaging with the corrugated ends 106a and 106b of the U-shaped lug 105 represented in FIG. 1. The tapered middle 221 may include (or be) a groove, such as a V-shaped radial groove. The tapered middle 221 may be configured to be an interference fit (e.g., slightly larger) than a gap between the corrugated ends 106a, 106b. The amount of interference affects, and is proportional to, the amount of force required to couple the tapered middle 221 to the corrugated ends 106a, 106b.

The multi-forked cylindrical fastener 220 may include any number of forks 225a-d, such as two or more, three or more, four or more, or the like. For example, the multi-forked cylindrical fastener 220 may include exactly four forks 225a-d. The plurality of forks 225a, 225b, 225c, and 225d each extend independently in a pie shape form from the fastener base 216, such that when in contact with the corrugated ends 106a and 106b of the U-shaped lug, the plurality of forks 225a, 225b, 225c, and 225d are configured to radially compress towards each other, providing a spring like radial contact force. Such a spring force may aid assembly while also resisting disassembly, and providing continuous electrical contact.

When installing the power distribution unit 130, force may be applied in the y axis (as shown in scale 131 of FIG. 1) such that when the corrugated ends 106a, 106b make contact with the multi-forked cylindrical fastener 220, the corrugated ends 106a, 106b radially compress the engaged forks 225a, 225b, 225c, 225d until the multi-forked cylindrical fastener 120 is coupled (e.g., fixedly coupled in place) within the U-shaped lug 105. As the multi-forked cylindrical fastener 120 is coupled within the U-shaped lug 105 the tapered design of the multi-forked cylindrical fastener 120 fixedly couples the corrugated ends 106a and 106b to the lug base 117 of the U-shaped lug 105, thereby providing constant physical and electrical connection.

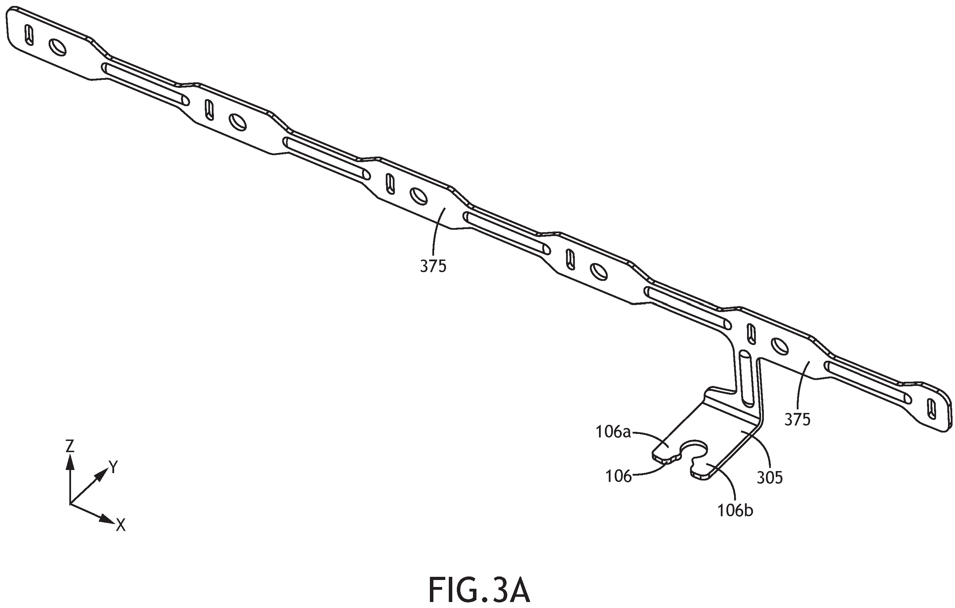

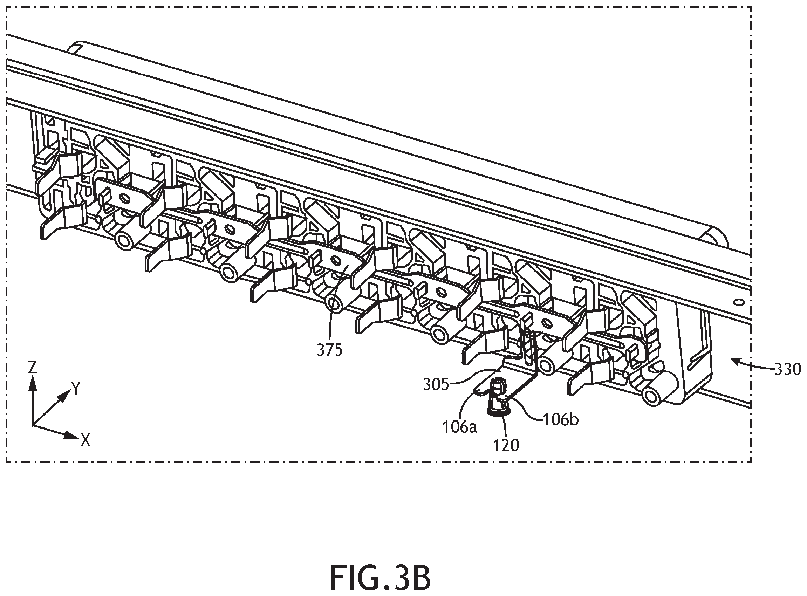

FIGS. 3A and 3B illustrate perspective views of the self-clinching fastener 100 including a grounding bar 375 and rear view of a PDU 330, respectively, in accordance with one or more embodiments of the present disclosure. FIG. 3A and 3B represents an additional embodiment of the self-clinching fastener 100 which includes a grounding bar 375.

In embodiments, the grounding bar 375 is made by an extruded manufacturing process whereby a U-shaped lug 305 extends perpendicularly from one end of the grounding bar 375. In practice, the grounding bar 375 may be advantageously connected to a PDU 330, thereby connecting the ground connector of a plurality of receptacles 110 to the grounding bar 375. When fixed in place (e.g., fully assembled into the rack), the U-shaped lug 305 may be configured to be secured and electrically coupled to the multi-forked cylindrical fastener 120. For example, the final mounted locations may be positioned to force such a coupling to take place during the mounting process itself, by virtue of the exact dimensions, arrangement, and assembly methodology (e.g., sliding) of the U-shaped lug 305 and the multi-forked cylindrical fastener 120. For instance, the rack itself may be configured to receive the U-shaped lug 305 via sliding features such as tabs, slots, or the like.

In embodiments, the U-shaped lug 105 is configured to be coupled to a line connection of the receptacle 110. In embodiments, the U-shaped lug 105 is configured to be coupled to a neutral connection of the receptacle 110.

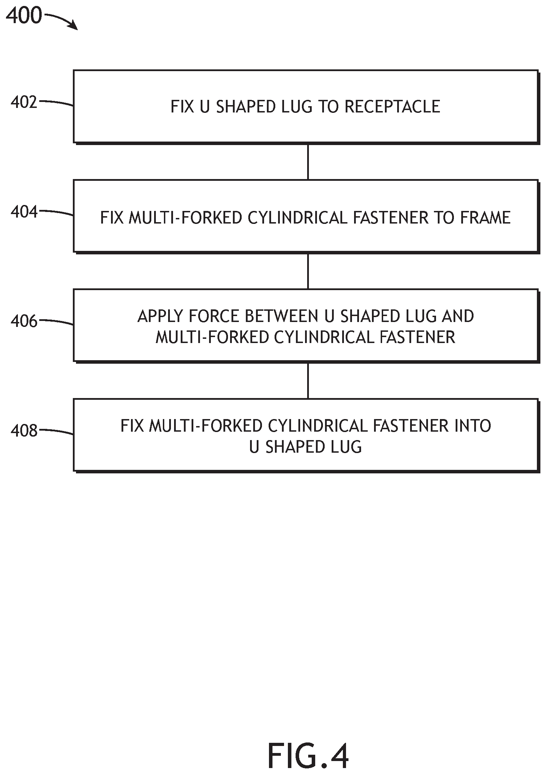

FIG.4 illustrates a flow diagram illustrating steps performed in a method 400 for coupling (e.g., fixing) a multi-forked cylindrical fastener 120 to a U-shaped lug 305, in accordance with one or more embodiments of the present disclosure. The embodiments and enabling technologies described previously herein in the context of the self-clinching fastener 100 should be interpreted to extend to the method 400. It is further noted, however, that the method 400 is not limited to the architecture of the self-clinching fastener 100. In this way, the various process steps of the method 400 may be implemented using any number or type of components.

In embodiments, the method 400 includes a process step 402 where the U-shaped lug 305 is first coupled (e.g., fixed) to a receptacle 110. For example, the U-shaped lug may be formed as part of the receptacle 110, soldered to the receptacle 110, fastened to the receptacle 110, or the like by way of any manufacturing process known in the art.

In embodiments, the method 400 includes a process step 404 where the multi-forked cylindrical fastener 120 is coupled (e.g., fixed) to the rack. For example, the multi-forked cylindrical fastener 120 may be coupled to a grounding source (e.g., ground/frame) of a rack using one or more methodologies (e.g., fasteners (not shown), welds, threaded studs welded to the frame with corresponding internal threads on the multi-forked cylindrical fastener 120, and/or the like).

In embodiments, the method 400 includes a process step 406 of applying a force between the U-shaped lug 305 and the multi-forked cylindrical fastener 120 in relation to each other. For example, the receptacle 110 including the U-shaped lug 305 may be moved/pressed onto the multi-forked cylindrical fastener 120.

In embodiments, the method 400 includes a process step 408, based on step 406, where the multi-forked cylindrical fastener 120 is coupled within the U-shaped lug 305, thereby physically and electrically connecting the U-shaped lug 305 to the multi-forked cylindrical fastener 120.

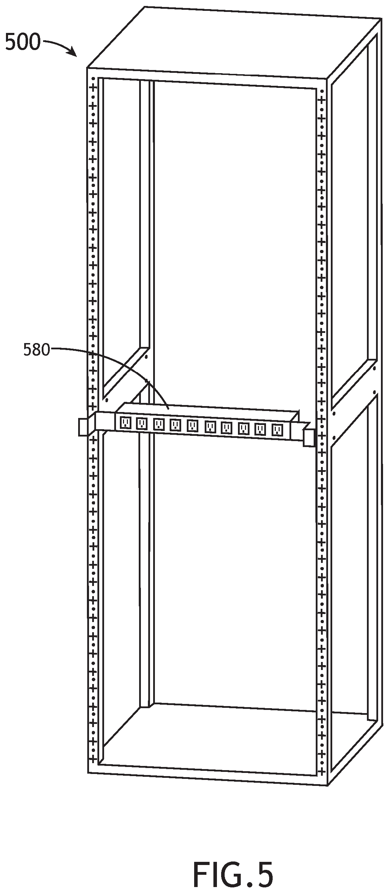

FIG. 5 illustrates a rack PDU 580 of a rack 500, in accordance with one or more embodiments of the present disclosure. The rack PDU 580 may include one or more receptacles 110. While not shown, the back side of the rack PDU 580 may include the U-shaped lug 305, which may be aligned to couple with a corresponding multi-forked cylindrical fastener 120 on the frame. In this way, the rack PDU 580 may be electrically grounded to the frame of the rack 500, simply by sliding the rack PDU 580 onto the rack 500.

Also disclosed are the following numbered items:
1. A self-clinching fastener, comprising:
   a U-shaped lug with corrugated ends, connected to a grounding bar; and
   a multi-forked cylindrically shaped fastener having a tapered middle configured to contact the U-shaped lug,
   wherein applied contact force between the multi-forked cylindrically shaped fastener and the U-shaped lug fixes the multi-forked cylindrically shaped fastener within the U-shaped lug.
2. The self-clinching fastener of item 1, wherein the multi-forked cylindrically shaped fastener is fixed to a grounding source.
3. The self-clinching fastener of item 2, wherein the U-shaped lug is connected to a line connection of a receptacle.
4. The self-clinching fastener of item 2, wherein the U-shaped lug is connected to a neutral connection of a receptacle.
5. The self-clinching fastener of any of items 2 to 4, wherein the multi-forked cylindrically shaped fastener is fixed to a frame.

Process flowcharts discussed herein illustrate the operation of possible implementations of systems, and methods according to various embodiments of the present invention.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not intended to be exhaustive or to limit the embodiments to the precise forms disclosed. It will be apparent to one of ordinary skill in the art that many modifications and variations are possible in view of the above teachings.

## Claims

1. A self-clinching fastener (100), comprising:
a U-shaped lug with corrugated ends (105); and
a multi-forked cylindrically shaped fastener (120) having a tapered middle configured to contact the U-shaped lug,
wherein applied contact force between the multi-forked cylindrically shaped fastener and the U-shaped lug fixes the multi-forked cylindrically shaped fastener within the U-shaped lug.

2. The self-clinching fastener of claim 1, wherein the U-shaped lug is connected to a receptacle (110) or a grounding bar (375).

3. The self-clinching fastener of claim 2, wherein the U-shaped lug is connected to a ground connection of the receptacle (111).

4. The self-clinching fastener of claim 2 or 3, wherein the U-shaped lug is connected to a line connection of the receptacle.

5. The self-clinching fastener of any of claims 2 to 4, wherein the U-shaped lug is connected to a neutral connection of the receptacle.

6. The self-clinching fastener of any preceding claim, wherein the multi-forked cylindrically shaped fastener is fixed to a frame.

7. The self-clinching fastener of any preceding claim, wherein the multi-forked cylindrically shaped fastener is fixed to a grounding source.

8. A method of coupling a self-clinching fastener, comprising:
coupling (402) a U-shaped lug to a receptacle;
coupling (404) a multi-forked cylindrical fastener to a frame;
applying force (406) between the U-shaped lug and the multi-forked cylindrical fastener; and
coupling (408), based on the force, the U-shaped lug to the multi-forked cylindrical fastener.

9. The method of claim 8, wherein coupling the U-shaped lug to the receptacle comprises the U-shaped lug being physically and electrically connected to a ground connection of the receptacle.

10. The method of claim 8 or 9, wherein the multi-forked cylindrical fastener includes a plurality of forks (225a-d) extending cylindrically from a fastener base (116) with a tapered middle ending at a lug base (217).

11. The method of claim 10, wherein the plurality of forks each extend independently in a pie shape form from the fastener base, such that when in contact with corrugated ends of the U-shaped lug, the plurality of forks are configured to radially compress towards each other, providing a spring like radial contact force.

12. The method of any of claims 8 to 11, wherein coupling the U-shaped lug to the multi-forked cylindrical fastener provides constant physical and electrical connection.

13. The method of claims 8 to 12, wherein the U-shaped lug is fixed to a grounding bar (375), and the grounding bar is connected to a power distribution unit "PDU" (330).

14. The method of any of claims 8 to 13, wherein the U-shaped lug is configured to couple to a line connection of the receptacle.

15. The method of any of claims 8 to 14, wherein the U-shaped lug is configured to couple to a neutral connection of the receptacle.
